# EUROPÄISCHE PATENTSCHRIFT

(11) **EP 1 346 920 B1**
(45) Veröffentlichungstag und Bekanntmachung des Hinweises auf die Patenterteilung: **02.07.2008**
(21) Anmeldenummer: 03003974.7
(22) Anmeldetag: 22.02.2003
(51) Int. Cl.: B65D 1/16

(54) **Verpackungsbehälter**
Packaging container
Recipient de conditionnement

(30) Priorität: 05.03.2002 DE 10210907
(43) Veröffentlichungstag der Anmeldung: 24.09.2003
(73) Patentinhaber: Etimex Primary Packaging GmbH, 89165 Dietenheim (DE)
(72) Erfinder: Kleiner, Hans-Peter, 89269 Vöhringen (DE)
(74) Vertreter: Wössner, Gottfried

(56) Entgegenhaltungen:
- AT-B- 336 483
- DE-A1- 1 486 225
- DE-B- 1 215 348
- GB-A- 1 454 780

## Beschreibung

Die Erfindung betrifft einen Verpackungsbehälter mit einem ein Verpackungsgut aufnehmenden becherförmigen Unterteil mit einem eine Becheröffnung definierenden oberen Rand und einem die Becheröffnung vorzugsweise hermetisch verschließenden Deckel, wobei der Deckel vorzugsweise als sogenannter Ring-Pull-Deckel aus Metall ausgebildet ist.

Solche Verpackungsbehälter sind vielfältig in Form von Ring-Pull-Konservendosen als Lebensmittelverpackung im Einsatz.

Das becherförmige Unterteil dieser Verpackungsbehälter ist, ebenso wie der Ring-Pull-Deckel selbst, aus Zinkblech oder Aluminiumblech oder -folie gefertigt und erhält seine jeweilige Form durch einen Tiefziehprozess.

Die Energiebilanz solcher Verpackungsbehälter ist aufgrund der notwendigen Verarbeitung von Metallen zu Blechen relativ ungünstig, und außerdem weisen die Verpackungsbehälter ein relativ hohes Gewicht auf.

Andererseits garantieren die Verpackungsbehälter aus Metall, dass das becherförmige Unterteil und der Deckel exakt aufeinander passend hergestellt werden können, so dass insbesondere bei empfindlichen Verpackungsgütern wie Lebensmitteln, der notwendige sichere Schutz für das Verpackungsgut aufgrund der ausgezeichneten Dichtigkeit der Verbindung zwischen Ring-Pull-Deckel und becherförmigem Unterteil garantiert werden kann.

Aufgabe der vorliegenden Erfindung ist es, einen Verpackungsbehälter vorzuschlagen, der bei gleicher Qualität bezüglich dem Schutz für das Verpackungsgut, insbesondere auch lebensmitteltauglich ist und ein geringeres Gewicht aufweist.

Diese Aufgabe wird erfindungsgemäß durch einen Verpackungsbehälter der eingangs genannten Art gelöst, bei dem das Unterteil ein tiefgezogener Kunststoffbecher mit einem beim Tiefziehen ausgeformten oberen Rand mit kalibrierter Wanddicke ist, der eine im Wesentlichen spielfreie Aufnahme für den Deckel bildet. Anschließend an dem oberen Rand weist der becherförmige Unterteil eine durch Materialverdrängung beim Kalibrieren gebildete Materialanhäufung auf.

Der Deckel wird insbesondere als sogenannter Ring-Pull-Deckel ausgebildet, welcher ein Öffnen des Verpackungsbehälters ohne Zuhilfenahme von Werkzeug ermöglicht.

In der vorliegenden Erfindungsbeschreibung soll unter Ring-Pull-Deckel jede Art von Deckel verstanden werden, der aus Metallblech und/oder Metallfolie gefertigt ist und einen häufig ringförmigen Deckelrand, der sich dichtend mit dem oberen Rand des Unterteils verbinden lässt, sowie einen häufig kreisrunden Mittenbereich aufweist, welcher mit dem Deckelrand separierbar verbunden ist. Am Mittenbereich ist schließlich ein Griffelement in Form einer Lasche oder eines Rings befestigt, mit Hilfe dessen der Mittenbereich entlang einer vorgegebenen Trennlinie vom Deckelrand abgelöst und somit die Verpackung geöffnet werden kann.

Die becherförmigen Unterteile sind selbstverständlich nicht auf rotationssymetrische Formen beschränkt, sondern können ebensogut eine ovale oder nahezu rechteckige Becheröffnung aufweisen.

Der obere Rand mit kalibrierter Wanddicke schafft die Voraussetzung dafür, dass die erfindungsgemäßen Verpackungsbehälter auf den bereits existierenden Verpackungsanlagen so wie die bisher bekannten Verpackungsbehälter mit einem metallenen Unterteil verarbeitet werden können.

Im Gegensatz zu metallischen Werkstoffen muss Kunststoff für das Tiefziehen erwärmt werden und führt demzufolge bei der vorliegenden Anwendung zu Toleranzproblemen. Der Außendurchmesser des becherförmigen Unterteils und damit auch der Außendurchmesser des die Becheröffnung umgebenden Randes wird auch beim Tiefziehen von Kunststofffolien durch das Tiefziehwerkzeug vorgegeben,

Durch das Tiefziehen kommt es am oberen Rand des becherförmigen Unterteils zu einer Materialverdrängung, was zu Materialanhäufungen führt, die sich herkömmlich nicht kontrollieren lassen. Das Tiefziehen von Kunststofffolien bringt deshalb immer eine Änderung der Wanddicken, insbesondere am Rand, mit sich. Deshalb bilden sich unzulässige Dickenabweichungen des Innendurchmessers aus, ebenso wie des Becherrandes, was zu Dichtigkeitsproblemen bei der Verbindung mit den Ring-Pull-Deckeln führt.

In herkömmlichen Tiefziehverfahren gebildete Verpackungsbehälter aus Kunststoff sind zum Beispiel aus der DE 14 86 225 und der GB 1 454 780 bekannt.

Eine Alternative hierzu, nämlich den Becher spritzzugießen, verbietet sich alleine aufgrund der zu hohen Verfahrenskosten.

Der erfindungsgemäße Verpackungsbehälter wird deshalb erstmals möglich durch ein Verfahren zu dessen Herstellung, das ebenfalls Gegenstand dieser Erfindung ist und das weiter unten noch näher erläutert werden wird, bei dem als Teil des Herstellverfahrens in einem Schritt die Kalibrierung des die Becheröffnung umgebenden Randes erfolgt.

Bevorzugt werden die becherförmigen Unterteile aus Kunststoff stapelfähig ausgebildet. Dies erlaubt ein rationelles Verpacken der in den Verpackungsbehältern zu verpackenden Ware.

In diesem Zusammenhang wird die Seitenwandung des becherförmigen Unterteils bevorzugt leicht nach außen geneigt ausgebildet. Eine weitere Erleichterung beim Separieren gestapelter Unterteile wird dadurch erreicht, wenn im Bereich des Becherrandes ein auf der Innenseite angeordneter Vorsprung, der beispielsweise in konstanter Becherhöhe ringsumlaufend sein kann, vorgesehen wird, auf dem sich der folgende Becher mit seiner Außenoberfläche abstützt. Dadurch wird der Materialkontakt zweier aufeinander folgender Becher auf eine minimale Fläche reduziert, was das Risiko des Verklemmens der ineinander gestapelten Becher reduziert.

Weiter bevorzugt weist das becherförmige Unterteil des erfindungsgemäßen Verpackungsbehälters einen Randbereich auf, der sich gegenüber der Seitenwand des Bechers radial nach außen erweitert.

Bevorzugt wird in diesem radial nach außen erweiterten Randbereich der Vorsprung angeordnet, der die Auflage für die Außenwand des im Stapel folgenden Bechers bildet. Damit kann auch bei dieser konstruktiven Lösung das Nutzvolumen des becherförmigen Unterteils mit glatten Oberflächen ausgebildet werden.

Im Hinblick auf eines der bevorzugten Verpackungsgüter für die erfindungsgemäßen Verpackungsbehälter, nämlich Lebensmittel, ist es von Vorteil, wenn die becherförmigen Unterteile aus Kunststoff sterilisierbar sind. Kunststoffe, die diesen Anforderungen genügen, sind dem Fachmann bekannt. Beispielsweise eignen sich Polypropylen, Polyethylen hoher Dichte und kristalline Polyester.

Die Kalibrierung der Dicke des Randes des becherförmigen Unterteils aus Kunststoff wird vorzugsweise mit einer Toleranz von ± 0,03 mm oder weniger, insbesondere ± 0,02 mm oder weniger, bezogen auf eine Dicke des Randes von 0,4 mm, vorgenommen. Dies erlaubt mit den herkömmlichen sogenannten Ring-Pull-Deckeln ein sicheres Verschließen und gewährleistet auch nach einer Sterilisierung des verschlossenen Verpackungsbehälters die Aufrechterhaltung der Sterilität des Verpackungsgutes auch über eine lange Lagerdauer.

Besonders bevorzugt und mit der erfindungsgemäßen Lösung der gestellten Aufgabe besonders einfach darzustellen ist der Wunsch nach einer transluzenten oder gar transparenten Ausgestaltung des becherförmigen Unterteils. Dies ist insbesondere bei der Verpackung von Lebensmitteln von Vorteil, da so dem Kunden unmittelbar ein optischer Eindruck der verpackten Ware verschafft werden kann. Kunststofffolien, die sich besonders gut zum Herstellen transluzenter oder transparenter becherförmiger Unterteile eignen, sind z.B. Polypropylenfolien.

Die Erfindung betrifft, wie weiter oben bereits angesprochen, ebenfalls ein Verfahren zur Herstellung des Verpackungsbehälters mittels eines Tiefziehverfahrens, wobei hier eine tiefziehbare Kunststofffolie mittels eines Tiefziehvorgangs tiefgezogen wird, wobei ein Tiefziehwerkzeug mit einem Oberstempel, einem Formteil und einem Niederhalter verwendet wird, wobei der Niederhalter eine umlaufende Schulter aufweist, welche die Tiefziehfolie im Bereich des Becherrandes während des Tiefziehvorgangs gegen eine Auflage drückt und fixiert und wobei ein sich an die Schulter des Niederhalters radial nach innen anschließender, sich nach unten erstreckender ringförmiger Vorsprung über die Oberfläche der Schulter hinaus in das Bechervolumen des Tiefziehwerkzeugs hinein verfahren wird, wobei der Vorsprung zusammen mit einer an die Auflage radial nach innen angrenzenden Wandfläche den oberen Rand des becherförmigen Unterteils ausformt und unter Materialverdrängung kalibriert. Dabei wird am Rand des becherförmigen Unterteils durch Materialverdrängung die Dicke des Becherrandes auf eine vorgegebene Dicke kalibriert. Das eigentliche Bechervolumen des becherförmigen Unterteils dabei, wie an sich bekannt, durch den Oberstempel und das Formteil gebildet.

Die Tiefziehfolie wird wie üblich vor dem Einlegen in das Tiefziehwerkzeug auf eine Temperatur vorgeheizt, die knapp unter dem Kristallitschmelzpunkt liegt, bei Polypropylenfolien ca. 155° C.

Nach einem bevorzugten Verfahren wird der Niederhalter sowie der ringsumlaufende, sich nach unten erstreckende ringförmige Vorsprung zur Kalibrierung der Dicke des Randes des becherförmigen Unterteils zunächst nach unten in die jeweilige Arbeitsposition gefahren und erst dann mit dem Oberstempel die Tiefziehfolie zu einem becherförmigen Unterteil verformt.

Weiter bevorzugt wird ein Niederhalter verwendet, der benachbart zur Schulter einen ringsumlaufenden, sich nach unten erstreckenden, ringförmigen Vorsprung zur Kalibrierung der Dicke des Randes des becherförmigen Unterteils aüfweist, so dass die Kalibrierung und Materialverdrängung am Rand des becherförmigen Unterteils in einem Arbeitsschritt mit der Fixierung der Tiefziehfolie im Tiefziehwerkzeug vorgenommen wird.

Bei einer besonders bevorzugten Variante des erfindungsgemäßen Verfahrens wird der der Kalibrierung dienende ringsumlaufende nach unten abstehende Vorsprung beim Kalibrieren und auch beim Tiefziehvorgang selbst gekühlt.

Diese und weitere Vorteile der Erfindung werden im Folgenden anhand der Zeichnungen noch näher erläutert.

Es zeigen im Einzelnen:
- Fig. 1:: eine Schnittansicht durch eine Tiefziehvorrichtung zur Herstellung des erfindungsgemäßen Verpackungsbehälters und im Vergleich eine Tiefziehvorrichtung zur Veranschaulichung des Verfahrens gemäß dem Stand der Technik;
- Fig. 2:: eine Detailansicht einer Vorrichtung zur Durchführung des erfindungsgemäßen Verfahrens zur Herstellung eines erfindungsgemäßen Verpackungsbehälters;
- Fig. 3:: eine Detailansicht eines erfindungsgemäßen Verpackungsbehälters.

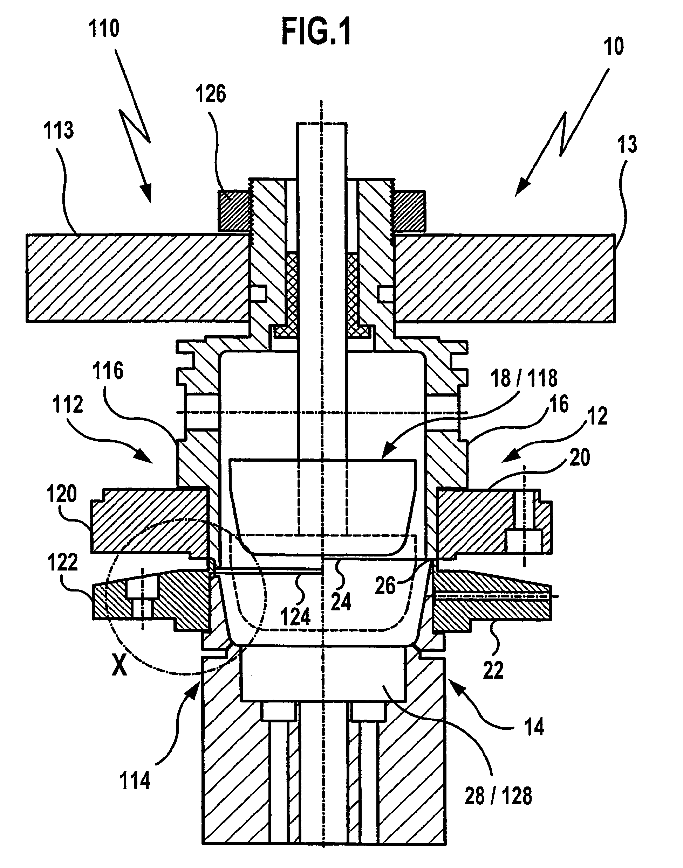

Figur 1 zeigt im rechten Teil ihrer Darstellung eine insgesamt mit dem Bezugszeichen 10 bezeichnete herkömmliche Tiefziehvorrichtung, die im Folgenden noch näher erläutert werden wird. Im linken Teil der Darstellung ist eine neuartige Tiefziehvorrichtung 110 enthalten, mit der das erfindungsgemäße Verfahren durchgeführt und ein erfindungsgemäßer Verpackungsbehälter hergestellt werden kann.

Die beiden Darstellungen im rechten und im linken Teil sind schematischer Art und so ausgeführt, dass der direkte Vergleich zwischen dem herkömmlichen Tiefziehverfahren und dem erfindungsgemäßen möglich ist.

Die herkömmliche Tiefziehvorrichtung 10 weist ein Tiefziehwerkzeug 12 mit einem Formteil 14, einem Niederhalter 16, einem Oberstempel 18, einer Schnittplatte 20 und einem Schnittstempel 22 auf.

Beim Tiefziehvorgang wird eine Tiefziehfolie 24 in die Tiefziehvorrichtung 10 eingelegt, so dass sie zwischen einem oberen Rand 26 des Formteils 14, welcher eine Auflage bildet, und dem Niederhalter 16 bzw. dessen rings um das Formteil 14 und die darin ausgebildete Hohlform umlaufenden Rand bei niedergedrücktem Niederhalter 16 fixiert werden kann.

Nachfolgend wird der Oberstempel 18 nach unten gefahren, wobei dieser unter Verformung der vorgeheizten Folie 24 in den Hohlraum des Formteils 14 eindringt und so ein becherförmiges Unterteil für eine Verpackung ausformt.

Nach der Ausformung des becherförmigen Unterteils wird dann über die Schnittplatte 20, die nach unten gefahren wird, gegen den Schnittstempel 22 der verbleibende überschüssige Rand an Tiefziehfolie abgeschert und so das becherförmige Unterteil aus der Tiefziehfolie herausgeschnitten. Danach wird der Oberstempel 18 nach oben verfahren, das Tiefziehwerkzeug 12 mittels Anheben der Grundplatte 13 geöffnet und über einen Auswurfstempel 28 das so hergestellte becherförmige Unterteil aus dem Formenwerkzeug 12 bzw. aus dem Formteil 14 herausgedrückt. Danach kann der nächste Tiefziehprozess, der wieder mit dem Einlegen der vorgeheizten Tiefziehfolie 24 beginnt, fortgesetzt werden.

Bei diesem Prozess bilden sich auf Grund der Materialverdrängung, die beim Tiefziehen durch den Oberstempel 18 vorkommt, Materialanhäufungen im Bereich des oberen Endes der Seitenwandung des becherförmigen Unterteils, benachbart zu dem eine Auflage für den Niederhalter bildenden oberen Rand 26 des Formteils 14.

Auf Grund der Notwendigkeit, die Folie vorzuwärmen, kommt es zu einem erzwungenen Fließen des Materials der Tiefziehfolie, ein Vorgang, der sich nicht so beherrschen lässt, dass sich mit vorzugebender Präzision Wanddicken im Bereich des oberen Randes des auszuformenden becherförmigen Unterteils ausgebildet werden können. Während die Außenkonturen des becherförmigen Unterteils durch das Formteil 14 vorgegeben werden und hier auch ein kalibrierter Außendurchmesser erzielbar ist, weichen doch die Innendurchmesser eines so hergestellten becherförmigen Unterteils über den Verlauf des oberen Randes des becherförmigen Unterteils gesehen voneinander ab, was im Zusammenhang mit der Herstellung von Ring-Pull-Verpackungen, an die eine erhöhte Anforderung an die Qualität der Dichtung zwischen Deckel und becherförmigem Unterteil gestellt wird, problematisch ist.

Deshalb ergeben sich über den Verlauf des oberen Randes des becherförmigen Unterteils gesehen Materialdickenschwankungen, die im Einsatz solcher herkömmlich hergestellter becherförmiger Unterteile für Ring-Pull-Verpackungen entgegenstehen.

Demgegenüber weist die Tiefziehvorrichtung 110 gemäß der vorliegenden Erfindung ein Tiefziehwerkzeug 112 auf, welches sich in ein oberes Teil, welches an einer Grundplatte 113 für eine Auf- und Abbewegung in vertikaler Richtung gehalten ist, und ein unteres Teil mit einem Formteil 14 trennen lässt, um in dieser getrennten Stellung eine vorgeheizte Tiefziefolie 124 in die Tiefziehvorrichtung einlegen zu können.

Der obere Teil des Tiefziehwerkzeuges setzt sich auch hier aus einem Niederhalten 116 und einer zugehörigen Schnittplatte 120 zusammen, ähnlich wie dies im Fall des herkömmlichen Tiefziehwerkzeugs 12 zuvor im Einzelnen beschrieben wurde.

Auch bei dem erfindungsgemäßen Tiefziehvorgang wird für das Zusammenwirken mit der Schnittplatte 120 ein Schnittstempel 122 benötigt, um Folienreste von dem becherförmigen Unterteil nach dem Tiefziehvorgang abscheren zu können.

Am Ende wird auch über einen Auswurfstempel 128 das becherförmige Unterteil wieder aus dem Formteil 114 ausgeworfen, bevor ein neuer Tiefziehvorgang stattfinden kann.

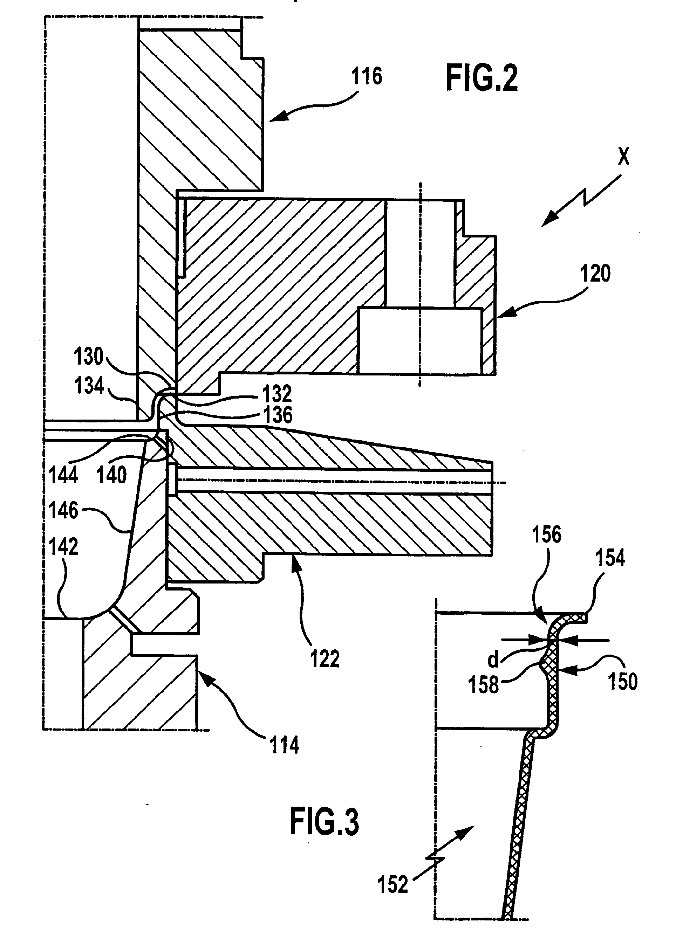

Im Unterschied zu der herkömmlichen Tiefziehvorrichtung 10 weist die erfindungsgemäße Tiefziehvorrichtung 110 eine andere Gestaltung des Bereichs von Niederhalter 116 und dem oberen Rand des Formteils 114 auf, was im Folgenden an Hand der vergrößerten Darstellung der Figur 2 noch näher erläutert, die die Einzelheit X der Figur 1 (gespiegelt) vergrößert darstellt. Insbesondere wird hier noch einmal der grundlegende Aufbau der Tiefziehvorrichtung mit einem Formteil 114, einem Niederhalter 116, einer Schnittplatte 120 und einem Schnittstempel 122 deutlich.

Bei der hier gezeigten Ausführungsform des Niederhalters 116 weist dieser zum einen eine umlaufende Schulter 130 auf, welche gegen eine Auflagefläche 132 vorgespannt wird und zwischen sich und der Auflage 132 die Tiefziehfolie 124 (hier nicht dargestellt) einspannt und fixiert.

Bei der gezeigten bevorzugten Ausführungsform des Niederhalters 116 schließt sich radial nach innen an die Schulter 130 ein nach unten vorspringender, ringsum verlaufender Vorsprung 134 an, welcher zusammen mit einer an die Auflage 132 radial nach innen angrenzenden Wandfläche einen oberen Rand des becherförmigen Unterteils ausformt und kalibriert. Bevorzugt wird der Vorsprung 134 gekühlt, der in der gezeigten Ausführungsform einstückig mit der Schulter des Niederhalters 116 ausgebildet ist. Hier wird zwangsweise auch die Schulter 130 des Niederhalters 116 gekühlt.

In einfacher Weise wird eine hohe Genauigkeit der Randdicke und eine hohe Konstanz derselben über den Verlauf des Randes ermöglicht (beispielsweise eine Randdicke von 0,4 mm ± 0,02 mm), in dem am Tiefziehwerkzeug 112 ein mechanischer Anschlag für die Schließbewegung des Werkzeugs und insbesondere für die Abwärtsbewegung des kalibrierenden Vorsprungs 134 vorgesehen wird, der hier in Form einer sich auf der Grundplatte 113 abstützenden Mutter 126 vorhanden ist.

Alternativ kommen selbstverständlich andere Lösungen als Anschlag in Betracht, wie Bolzen oder nach unten abstehende Ränder oder dgl., was dem Fachmann nicht näher erläutert werden muß.

Häufig werden sogenannte Mehrfachwerkzeuge verwendet, mit denen man beispielsweise 16 becherförmige Unterteile oder Becher gleichzeitig ausformen kann. Die vorstehend beschriebenen Möglichkeit zur Erzielung enger Toleranzen bekommen insbesondere bei solchen Mehrfachwerkzeugen Bedeutung.

Das Ergebnis dieser Ausformung bei einem erfindungsgemäßen, becherförmigen Unterteil ist in Figur 3 dargestellt, was im Folgenden noch näher beschrieben werden wird.

Eine Besonderheit der in Figur 2 dargestellten Tiefziehvorrichtung ist, dass hier nicht das Formteil 114 die Auflagefläche für die Tiefziehfolie bildet, sondern dass das Formteil 114 bündig mit seiner Innenwand in einem Rücksprung 140 des Schnittstempels 122 endet, und zwar unterhalb der Wandfläche 136, die für die Ausformung des Randbereiches am Außenumfang des becherförmigen Unterteils verantwortlich ist. Die Seitenwandung 136 ist hier gleichzeitig ein Teil des Schnittstempels 122, ebenso wie die Auflagefläche 132. Auf Grund der gewählten relativ großen Radien im Übergang zwischen der Auflagefläche 132 und der Seitenwandung 136 einerseits sowie beim Übergang von der Schulter 130 in den Vorsprung 134 bzw. dessen außenliegende Seitenwand, die der Seitenwand 136 gegenüberliegt, ist es möglich, die Tiefziehfolie in heißem Zustand und mit gekühltem Vorsprung 134 zu verformen und einen kalibrierten oberen Rand bzw. einen oberen Rand mit kalibrierter Wanddicke auszubilden, ohne dass eine Materialbeanspruchung der Tiefziehfolie in diesem Bereich auftritt, die später die Stabilität des Randes bzw. der Verbindung zwischen Rand und Ring-Pull-Deckel (nicht dargestellt) gefährden würde.

An die Seitenwand 136, die im Wesentlichen vertikal verläuft, schließt sich nach unten zum Boden des becherförmigen Unterteils hin bzw. zum Boden 142 des Bechervolumens des Formteils 114 hin, eine weitere, sich radial nach innen erstreckende Schulter 144 an, die im geschlossenen Zustand des Tiefziehwerkzeugs wie in Figur 2 dargestellt einen ausreichenden Abstand zu der Spitze des Vorsprunges 134 hält, so dass Materialverdrängungen in dem Raum zwischen dem Vorsprung 134 und der Schulter 144 problemlos aufgenommen werden können. Da im Bereich der Schulter 144 die Seitenwand 136 immer noch von der Innenwandung des Vorsprunges 134 zurückweicht, bleibt hier ein freies Volumen bestehen, das, auch wenn der Oberstempel (vgl. Figur 1) nach unten gefahren wird, um die Tiefziehfolie zu einem becherförmigen Unterteil zu verformen, zur Verfügung steht, so dass Materialverdrängungen in dieses Volumen hinein möglich sind und nicht dazu führen, dass Materialstauchungen und/oder Materialspannungen auftreten, die eine Kalibrierung der Dicke des Randes bzw. die Kalibrierung des Innendurchmessers des becherförmigen Unterteils im Bereich des Randes, der die Öffnung des becherförmigen Unterteils definiert, beeinträchtigen können. Somit wird eine stabile Geometrie des Becherrandes erhalten, die sich auch erhält, wenn das becherförmige Unterteil nach dem Tiefziehvorgang durch den Stempel 128 aus dem Tiefziehwerkzeug 112 ausgeworfen wird.

Der Boden 142 des Formteils 114 ist über eine leicht gegen die Vertikale geneigten Seitenwand 146 mit der Schulter 144 verbunden, welche eine Ausformung leicht stapelbarer erfindungsgemäßen becherförmigen Unterteile gewährleistet.

Figur 3 zeigt schließlich im Einzelnen die Ausbildung eines oberen Randbereiches 150 und eines becherförmigen Unterteils 152, der hier nur im Ausschnitt dargestellt ist.

Der obere Randbereich 150 definiert wie dargestellt die Becheröffnung und wird im Folgenden beim Verschließen des Verpackungsbehälters mit einem (Ring-Pull-)Deckel (nicht dargestellt) verschlossen.

Um eine optimale Dichtigkeit zwischen Ring-Pull-Deckel und Becher 152 zu erreichen, umfasst der Rand 150 einen oberen, im Wesentlichen radial nach außen abstehenden Flansch 154 sowie eine an diesen mit einem Radius anschließende Seitenwandung 156 mit einer kalibrierten Dicke d. Nach unten zum Becherboden anschließend an den oberen Rand 156 weist der Randbereich 150 eine Materialanhäufung 158 auf, welche auf Grund einer Materialverdrängung beim Kalibrieren des oberen Randes 156 entsteht.

Auf eine größere Genauigkeit der Ausbildung der Materialanhäufung 158 kommt es selbstverständlich nicht an, sondern es reicht aus, wenn der obere Rand 156 eine kalibrierte Dicke aufweist, die dann gleichzeitig für einen kalibrierten Innendurchmesser des Bechers 152 sorgt, da die Außenwandung des Randbereiches 150 durch das Tiefziehwerkzeug (im vorliegenden Fall) durch die Wandung 136 des Schnittstempels 122 kalibriert wird.

Die Materialanhäufung 158 dient auch dazu, beim Stapeln der becherförmigen Unterteile 152 dafür zu sorgen, dass diese nicht mit ihren Bodenteilen in Berührung kommen, so dass die Vereinzelung der Unterteile beim Verpackungsvorgang sehr einfach gelingt.

## Patentansprüche

1. Verpackungsbehälter mit einem ein Verpackungsgut aufnehmenden, becherförmigen Unterteil (152) mit einem eine Becheröffnung definierenden oberen Rand (156) und einem die Becheröffnung verschließenden Deckel, wobei das Unterteil (152) ein tiefgezogener Kunststoffbecher mit einem beim Tiefziehen ausgeformten oberen Rand (156) mit kalibrierter Wanddicke (d) ist, der eine im Wesentlichen spielfreie Aufnahme für den Deckel bildet, und wobei auschließend an den oberen Rand (156) der Becher (152) eine durch Materialverdrängung beim Kalibrieren gebildete Materialanhäufung (158) aufweist.

2. Verpackungsbehälter nach Anspruch 1, **dadurch gekennzeichnet, dass** das becherförmige Untertetil (152) aus Kunststoff stapelfähig ausgebildet ist.

3. Verpackungsbehälter nach Anspruch 1 oder 2, **dadurch gekennzeichnet, dass** das becherförmige Unterteil (152) aus Kunststoff aus einem sterilisierbaren Kunststoff hergestellt ist.

4. Verpackungsbehälter nach einem der Ansprüche 1 bis 3, **dadurch gekennzeichnet, dass** die Kalibrierung der Wanddicke (d) des oberen Randes (156) des becherförmigen Unterteils (152) eine Toleranz von ± 0,03 mm oder weniger, bezogen auf eine Dicke des Randes (156) von 0,4 mm, gewährleistet.

5. Verpackungsbehälter nach einem der Ansprüche 1 bis 4, **dadurch gekennzeichnet, dass** das becherförmige Unterteil (152) aus einem transluzenten oder transparenten Kunststoffmaterial hergestellt ist.

6. Verfahren zur Herstellung eines Verpackungsbehälters nach einem der Ansprüche 1 bis 5, **dadurch gekennzeichnet, dass** eine tiefziehbare Kunststofffolie mittels eines Tiefziehwerkzeugs (112) tiefgezogen wird, wobei das Tiefziehwerkzeug (112) einen Oberstempel (118), ein Formteil (114) und einen Niederhalter (116) umfasst, wobei der Niederhalter (116) eine umlaufende Schulter (130) aufweist, welche die Tiefziehfolie während des Tiefziehvorgangs gegen eine Auflage drückt und fixiert, und wobei das Tiefziehwerkzeug (112) ferner einen radial nach innen zur Schulter (130) angeordneten und sich nach unten erstreckenden, umlaufenden, ringförmigen Vorsprung (134) umfasst, welcher über die Schulter (130) des Niederhalters (116) hinaus in das Bechervolumen des Tiefziehwerkzeugs (112) hineinragend verfahren wird, wobei der Vorsprung (134) zusammen mit einer an die Auflage radial nach innen angrenzenden Wandfläche den oberen Rand (156) des becherförmigen Unterteils (152) ausformt und unter Materialverdrängung kalibriert, wobei die Wanddicke (d) des Randes (156) des becherförmigen Unterteils (152) auf eine vorgegebene Dicke kalibriert wird und wobei das Bechervolumen des Unterteils (152) wie an sich bekannt, durch den Oberstempel und das Formteil gebildet wird.

7. Verfahren nach Anspruch 6, **dadurch gekennzeichnet, dass** der Niederhalter (116) und der ringförmige nach unten abstehende Vorsprung (134) zur Kalibrierung der Dicke des Randes (156) des becherförmigen Unterteils (152) in ihre jeweilige Arbeitsposition gefahren werden und erst danach der Oberstempel (118) die Tiefziehfolie zum becherförmigen Unterteil (152) verformt.

8. Verfahren nach Anspruch 7, **dadurch gekennzeichnet, dass** der Niederhalter (116) und der ringförmige nach unten abstehende Vorsprung (134) gemeinsam und zeitgleich in ihre jeweilige Arbeitsposition gefahren werden.

9. Verfahren nach Anspruch 8, **dadurch gekennzeichnet, dass** ein Niederhalter (116) verwendet wird, an den der ringförmige nach unten abstehende und zur Kalibrierung der Dicke des Randes (156) des becherförmigen Unterteils (152) dienende Vorsprung (134) einstückig angeformt ist.

10. Verfahren nach einem der Ansprüche 6 bis 9, **dadurch gekennzeichnet, dass** der der Kalibrierung dienende ringförmige nach unten abstehende Vorsprung (134) gekühlt wird.

## Claims

1. Packaging container having a beaker-shaped bottom part (152) for holding packaged goods, an upper edge (156) which defines a beaker opening, and a lid which closes the beaker opening, wherein the bottom part (152) is a deep-drawn plastics beaker having an upper edge (156) of calibrated wall thickness (d), which is formed by deep drawing and which forms a substantially play-free seat for the lid, and wherein, adjacent to the upper edge (156), the beaker (152) has a bulge of accumulated material (158) formed by displacement of material during the calibration.

2. Packaging container in accordance with claim 1, **characterized in that** the beaker-shaped bottom part (152) made of plastics material is designed so as to be stackable.

3. Packaging container in accordance with claim 1 or 2, **characterized in that** the plastics beaker-shaped bottom part (152) is made of a sterilizable plastics material.

4. Packaging container in accordance with any one of claims 1 to 3, **characterized in that** the calibration of the wall thickness (d) of the upper edge (156) of the beaker-shaped bottom part (152) guarantees a tolerance of ± 0.03 mm or less, based on a thickness of the edge (156) of 0.4 mm.

5. Packaging container in accordance with any one of claims 1 to 4, **characterized in that** the beaker-shaped bottom part (152) is made of a translucent or transparent plastics material.

6. Process for the production of a packaging container in accordance with any one of claims 1 to 5, **characterized in that** a deep-drawable plastics sheet is deep-drawn by means of a deep-drawing die (112), the deep-drawing die (112) comprising a top ram (118), a shaping part (114) and a depresser (116), the depresser (116) having a circumferential shoulder (130) which presses and fixes the deep-drawing sheet against a support during the deep-drawing operation, and the deep-drawing die (112) further comprising a circumferential ring-shaped projection (134) disposed radially inwardly of the shoulder (130) and extending downwardly, wherein the projection is moved beyond the shoulder (130) of the depresser (116) so as to project into the beaker volume of the deep-drawing die (112), wherein the projection (134) together with a wall surface radially inwardly adjoining the support forms and calibrates the upper edge (156) of the beaker-shaped bottom part (152), whereby material becomes displaced, wherein the wall thickness (d) of the edge (156) of the beaker-shaped bottom part (152) is calibrated to a specific thickness, and wherein the beaker volume of the bottom part (152) is formed, as known per se, by the top ram and the shaping part.

7. Process in accordance with claim 6, **characterized in that** the depresser (116) and the ring-shaped, downwardly extending projection (134) are moved to their respective working position for calibrating the thickness of the edge (156) of the beaker-shaped bottom part (152), and only afterwards does the top ram (118) form the deep-drawing sheet into the beaker-shaped bottom part (152).

8. Process in accordance with claim 7, **characterized in that** the depresser (116) and the ring-shaped, downwardly extending projection (134) are moved together and simultaneously to their respective working position.

9. Process in accordance with 8, **characterized in that** a depresser (116) is used, on which there is integrally formed the ring-shaped, downwardly extending projection (134) serving to calibrate the thickness of the edge (156) of the beaker-shaped bottom part (152).

10. Process in accordance with any one of claims 6 to 9, **characterized in that** the ring-shaped, downwardly extending projection (134) serving for calibration is cooled.

## Revendications

1. Récipient d'emballage ou de conditionnement comprenant une partie inférieure (152) en forme de pot, qui reçoit un produit à emballer ou à conditionner et présente un bord supérieur (156) définissant une ouverture de pot, et comprenant également un couvercle fermant l'ouverture de pot, la partie inférieure (152) étant un pot en matière plastique obtenu par emboutissage et comportant un bord supérieur (156) qui est formé lors de l'emboutissage et présente une épaisseur de paroi (d) calibrée, et qui constitue un élément de réception sensiblement sans jeu pour le couvercle, et le pot (152) présentant, à la suite du bord supérieur (156), une accumulation de matière (158) formée par refoulement de matière lors du calibrage.

2. Récipient d'emballage selon la revendication 1, **caractérisé en ce que** la partie inférieure (152) en forme de pot, en matière plastique, est réalisée de façon à être empilable.

3. Récipient d'emballage selon la revendication 1 ou 2, **caractérisé en ce que** la partie inférieure (152) en forme de pot, en matière plastique, est réalisée en une matière plastique pouvant être stérilisée.

4. Récipient d'emballage selon l'une des revendications 1 à 3, **caractérisé en ce que** le calibrage de l'épaisseur de paroi (d) du bord supérieur (156) de la partie inférieure (152) en forme de pot, garantit une tolérance de ± 0,03 mm ou moins, en se référant à une épaisseur du bord (156) de 0,4 mm.

5. Récipient d'emballage selon l'une des revendications 1 à 4, **caractérisé en ce que** la partie inférieure (152) en forme de pot est réalisée en une matière plastique translucide ou transparente.

6. Procédé de fabrication d'un récipient d'emballage selon l'une des revendications 1 à 5, **caractérisé en ce qu'**une feuille de matière plastique pouvant être emboutie, est emboutie au moyen d'un outil d'emboutissage (112), cet outil d'emboutissage (112) comprenant un poinçon supérieur (118), une matrice de formage (114) et un serre-flan (116), le serre-flan (116) présentant un épaulement périphérique (130) qui, pendant l'opération d'emboutissage, presse la feuille à emboutir contre un support d'appui et la fixe, l'outil d'emboutissage (112) englobant par ailleurs une protubérance (134) périphérique, de forme annulaire, qui est agencée radialement vers l'intérieur par rapport à l'épaulement (130) et s'étend vers le bas, et est déplacée, au-delà de l'épaulement (130) du serre-flan (116), en faisant saillie dans le volume du pot de l'outil d'emboutissage (112), la protubérance (134) assurant, en commun avec une surface de paroi adjacente au support d'appui radialement à l'intérieur de celui-ci, le formage du bord supérieur (156) de la partie inférieure (152) en forme de pot ainsi que le calibrage de ce bord en produisant un refoulement de matière, l'épaisseur de paroi (d) du bord (156) de la partie inférieure (152) en forme de pot étant calibrée à une épaisseur prescrite, et le volume du pot de la partie inférieure (152) étant formé de manière connue en soi, par le poinçon supérieur et la matrice de formage.

7. Procédé selon la revendication 6, **caractérisé en ce que** le serre-flan (116) et la protubérance (134) de forme annulaire, en saillie vers le bas, pour le calibrage de l'épaisseur du bord (156) de la partie inférieure (152) en forme de pot, sont déplacés dans leur position de travail respective, et le poinçon supérieur (118) déforme ensuite seulement la feuille à emboutir en réalisant la partie inférieure (152) en forme de pot.

8. Procédé selon la revendication 7, **caractérisé en ce que** le serre-flan (116) et la protubérance (134) de forme annulaire, en saillie vers le bas, sont déplacés en commun et en même temps dans leur position de travail respective.

9. Procédé selon la revendication 8, **caractérisé en ce que** l'on utilise un serre-flan (116) qui est formé d'un seul tenant avec la protubérance (134) de forme annulaire, en saillie vers le bas, et servant au calibrage de l'épaisseur du bord (156) de la partie inférieure (152) en forme de pot.

10. Procédé selon l'une des revendications 6 à 9, **caractérisé en ce que** la protubérance (134) de forme annulaire, en saillie vers le bas, et servant au calibrage, est refroidie.
